# EUROPEAN PATENT SPECIFICATION

(11) **EP 3 073 091 B1**
(45) Date of publication and mention of the grant of the patent: **18.09.2019**
(21) Application number: 14874643.1
(22) Date of filing: 14.08.2014
(51) Int. Cl.: F04D 25/04, F04D 29/28, F04D 29/42, F04D 29/62, F04D 29/68

(54) **COMPRESSOR**
VERDICHTER
COMPRESSEUR

(30) Priority: 27.12.2013 JP 2013271369
(43) Date of publication of application: 28.09.2016
(73) Proprietor: Mitsubishi Heavy Industries, Ltd., Tokyo 108-8215 (JP)
(72) Inventor: IBARAKI, Seiichi, Tokyo 108-8215 (JP); HIRATANI, Fumito, Tokyo 108-8215 (JP)
(74) Representative: Hoffmann Eitle
(86) International application number: PCT/JP2014/071443
(87) International publication number: WO 2015/098175

(56) References cited:
- EP-A1- 1 383 987
- EP-A1- 1 586 745
- EP-A1- 1 884 627
- WO-A1-2012/085065
- JP-A- H06 212 988
- JP-A- 2002 257 092
- JP-A- 2004 332 733
- JP-A- 2005 344 713
- JP-A- 2007 056 870
- JP-U- 3 168 894

## Description

### TECHNICAL FIELD

The present disclosure relates to a compressor of a turbocharger to be used in an internal combustion engine.

### BACKGROUND ART

In recent years, a turbocharger is required to have a higher pressure ratio, a higher efficiency, and a larger capacity, thus resulting in an increase in the tip speed of an impeller wheel of a compressor. Accordingly, it is important to provide protection to prevent fragments of a damaged and exploded impeller wheel from flying out of a housing surrounding the impeller wheel (hereinafter, referred to as a "containment property".)

If an impeller wheel of a compressor breaks apart while rotating at a high speed, fragments of the impeller wheel scatter to a region between a radial direction and an axial direction, because the fragments receive a force in a circumferential direction (the radial direction) due to a centrifugal force and a force in the axial direction due to a pressure difference in the axial direction, for instance.

In particular, if a compressor housing has a structure in which kinetic energy is likely to propagate through the housing in the axial direction, for example a structure divided into a scroll-chamber frame and a guide casing of an intake-fluid introduction part, it is important to provide a measure to address kinetic energy in response to breakage of an impeller wheel in the axial direction, which includes, for instance, absorption of kinetic energy.

In a turbocharger disclosed in JP 2005-299 664 A, a gap is provided at a part of an inner housing of a compressor (between a connection part to a fluid intake part and an inside part of the inner housing) so that a substantial part of kinetic energy of a high-speed compressor wheel (impeller wheel) can be absorbed by the inside part deforming and moving in the axial direction in response to breakage of the compressor wheel (see e.g. paragraph 0022).

Moreover, EP 1 383 987 A1 discloses a radial compressor, in which, in the event of a compressor wheel bursting, housing parts or components fixed to the compressor housing are prevented from axially spinning away. Said compressor comprises a burst protection device having an inner wall which radially and externally defines a flow channel above the rotor blades of the compressor wheel, said inner wall being provided with a breaking point.

Other related art may be found in WO 2012/085065 A1 being directed to a burst protection device for radial compressors pertaining to turbochargers, EP 1 884 627 A1 describing a granular material damper and EP 1 586 745 A1 being directed to a compressor casing.

### SUMMARY

### Problems to be Solved

In a configuration in which an inner housing forms a scroll chamber like the turbocharger described in JP 2005-299 664 A, if an impeller wheel breaks apart, a large force may be applied to a part forming the scroll chamber to break a scroll part in response to a shock greater than a shock strength applied to the inner housing by a fragment or the like of the impeller wheel, which may raise a risk that a containment property cannot be maintained.

As the tip speed of an impeller wheel of a compressor is increasing today, kinetic energy of a damaged impeller wheel is also increasing, and thus it is required to improve a containment property of a compressor and to further enhance reliability of a turbocharger. Moreover, improvement of a containment property needs to be achieved while suppressing a production-cost increase due to a complicated structure.

An object of at least one embodiment of the present invention is to provide a compressor with an improved containment property and a simple structure.

### Solution to the Problems

The present invention is defined by the appendant independent claim 1. The respective dependent claims describe optional features and preferred embodiments.

A compressor according to at least one embodiment of the present invention comprises: a guide casing housing an impeller wheel for compressing an intake fluid, and being configured to guide the intake fluid; a scroll-chamber frame forming a scroll-chamber for guiding the intake fluid having passed through the guide casing to the outside, the scroll-chamber frame further comprising: a scroll-chamber inner forming part disposed outside the guide casing in a radial direction, and forming an inner peripheral wall surface of the scroll chamber; and the compressor further comprising: a cylindrical support part disposed outside the guide casing in the radial direction and inside the scroll-chamber inner forming part in the radial direction, the cylindrical support part of a cylindrical shape having the same central axis as the rotational axis of the impeller wheel; and a plurality of first ribs extending on an outer side with respect to the radial direction of the cylindrical support from the rotational axis S, and connected to the scroll-chamber inner forming part, and a second rib extending on an outer side with respect to the radial direction of the guide casing, and being disposed in a region surrounded by the cylindrical support part and the guide casing. The scroll-chamber inner forming part and the guide casing are connected to each other via the cylindrical support part. Moreover, the scroll-chamber inner forming part and the scroll-chamber outer forming part are fastened to each other by a bolt at a flange portion, and a silencer configured to reduce noise, wherein the silencer and the scroll-chamber frame are fastened to each other at a flange portion of the silencer and the flange portion of the scroll-chamber frame by the bolt.

If an impeller wheel breaks apart while rotating in a compressor of centrifugal-compression type, fragments of the impeller wheel may scatter to a region between the radial direction and the axial direction and hit the guide casing, in response to a force applied to the fragments in a circumferential direction (the radial direction) due to a centrifugal force and a force in the axial direction due to a pressure difference in the axial direction, for instance.

In the above compressor, the cylindrical support part of a cylindrical shape having the same central axis as the rotational axis of the impeller wheel connects the guide casing and the scroll-chamber inner forming part. Thus, if the impeller wheel breaks apart to scatter fragments in a region between the radial direction and the axial direction, the fragments firstly hit the guide casing and a part of kinetic energy is absorbed, and then the fragments hit the cylindrical support part and more of the kinetic energy is absorbed. Thus, energy of fragments is sufficiently reduced when the fragments reach the scroll part, which improves a containment property of the compressor.

Further, the cylindrical support part has a cylindrical shape and thus has a simple structure.

Thus, with the above compressor, it is possible to improve a containment property of the compressor with a simple structure in which the scroll-chamber inner forming part and the guide casing are connected to each other via the cylindrical support part of a cylindrical shape.

Moreover, the first rib reinforces the connection of the cylindrical support part between the scroll-chamber inner forming part and the guide casing. Further, if the impeller wheel breaks apart, the guide casing firstly breaks, then the cylindrical support part breaks, and next the first rib breaks to absorb a remaining part of kinetic energy of fragments that breakage of the cylindrical support part cannot absorb. As described above, providing the first rib makes it possible to absorb kinetic energy of fragments in two stages in response to breakage of the impeller wheel, which makes it possible to further improve a containment property of the compressor.

The guide casing is disposed the closest to the impeller wheel in the radial direction of the compressor, and is a major member that receives a force due to shock of scatter of fragments of the impeller wheel if the impeller wheel breaks apart.

With the compressor according to the above embodiment, rigidity of the guide casing is improved by the second rib portion disposed in a region surrounded by the cylindrical support part and the guide casing positioned in the vicinity of the impeller wheel, which makes it possible to reduce kinetic energy of fragments of the impeller wheel reaching the cylindrical support part connecting the scroll-chamber inner forming part and the guide casing if the impeller wheel breaks apart. Thus, a containment property of the compressor in response to breakage of the impeller wheel is further improved.

In some embodiments, the compressor further comprises a silencer which comprises: a silencer body part configured to reduce noise generated by interference of a flow of the intake fluid by rotation of the impeller wheel of the compressor; a bell-mouth part connected to the guide casing and configured to guide the intake fluid having passed through the silencer body part to the impeller wheel; and a third rib extending on an outer side with respect to the radial direction of the bell-mouth part.

If the compressor includes the above silencer, intake fluid having passed through the silencer is introduced into the compressor and pressurized. Thus, while the compressor is in operation, the pressure is lower at the silencer than at the compressor. Accordingly, if the impeller wheel of the compressor breaks apart, fragments of the impeller wheel scatter also toward the silencer from the compressor. Fragments having a large kinetic energy hit the guide casing, and a large force in the axial direction propagates through the guide casing to be applied to the silencer. If there is nothing to absorb a force in the axial direction, a connecting portion (connection by a bolt, for instance) between the silencer and the guide casing may break apart, and the silencer may fall off from the compressor.

The compressor according to the above embodiment includes the third rib extending radially outside the bell-mouth part. Thus, in response to breakage of the impeller wheel, kinetic energy having an axial component of scattering fragments is absorbed by breakage of the third rib, before the kinetic energy breaks a connection part between the silencer and the guide casing. As described above, with the third rib, it is possible to prevent the silencer body part from falling off from the guide casing in response to breakage of the impeller wheel, and to improve a containment property in the axial direction of the compressor.

### Advantageous Effects

According to at least one embodiment of the present invention, it is possible to improve a containment property with a simple structure.

### BRIEF DESCRIPTION OF DRAWINGS

FIG. 1 is a schematic diagram illustrating an overall configuration of an internal combustion engine system according to an embodiment.
FIG. 2 is a schematic cross-sectional view of a part of a compressor according to an embodiment.
FIG. 3 is a schematic cross-sectional view of a part of a compressor according to another embodiment.
FIG. 4 is an example of a schematic cross-sectional view taken along line B-B in FIG. 3.
FIG. 5 is another example of a schematic cross-sectional view taken along line B-B in FIG. 3.
FIG. 6 is an example of a schematic cross-sectional view taken along line A-A in FIG. 3.

### DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention.

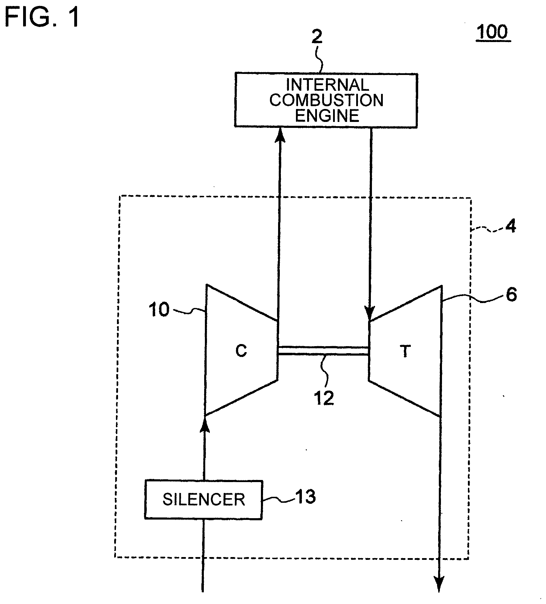

FIG. 1 is a schematic diagram illustrating an overall configuration of an internal combustion engine system 100 according to an embodiment.

The internal combustion engine system 100 illustrated in FIG. 1 includes an internal combustion engine 2, and a turbocharger 4 for pressurizing intake air sucked into the internal combustion engine 2.

The turbocharger 4 illustrated in FIG. 1 includes a compressor 10 of centrifugal type for pressurizing ambient air and supplying a fluid for combustion to the internal combustion engine 2, a turbine 6 coupled to the compressor 10 via a rotation shaft 12 and driven by exhaust gas discharged from the internal combustion engine 2, and a silencer 13 for reducing noise generated during rotation of an impeller wheel of the compressor 10.

The turbocharger 4 illustrated in FIG. 1 is a supercharging device of exhaust-turbine type, which is called a turbocharger, configured such that the compressor 10 is driven by the turbine 6 driven by exhaust gas discharged from the internal combustion engine 2.

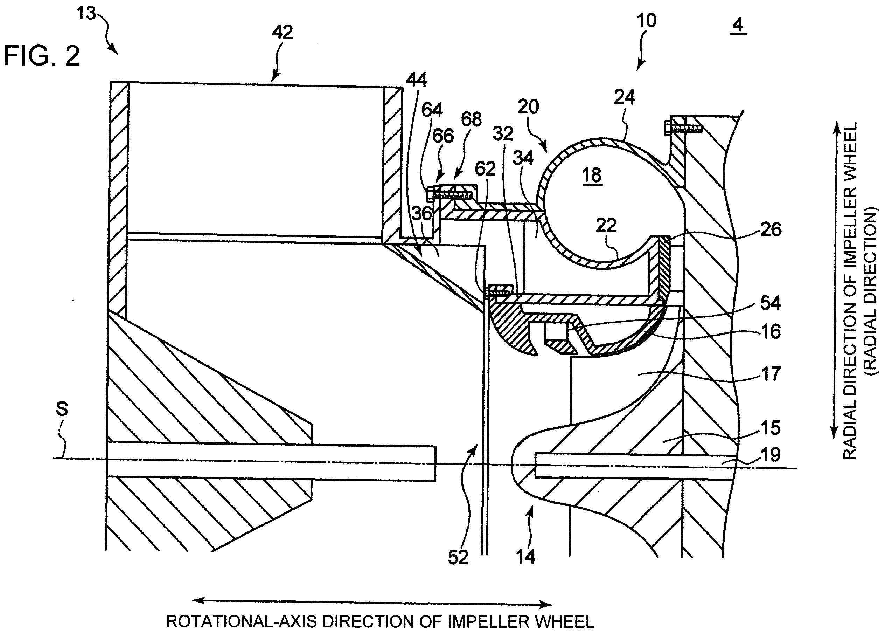

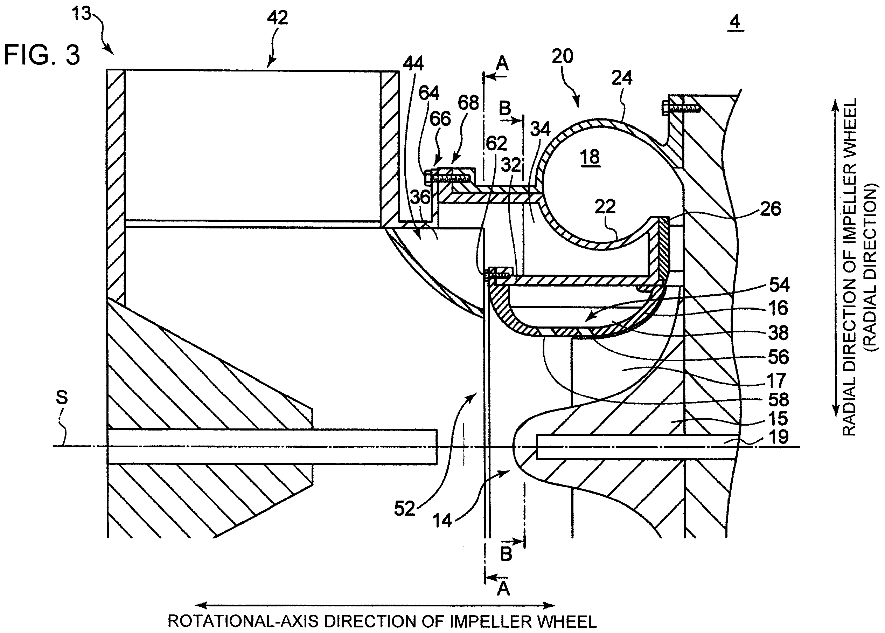

Next, a specific configuration example of the compressor 10 will be described below with reference to FIGs. 2 and 3.

FIGs. 2 and 3 are each a schematic cross-sectional view of a part of a compressor according to an embodiment.

The compressor 10 of the turbocharger 4 illustrated in FIGs. 2 and 3 is of centrifugal-compression type, and includes an impeller wheel 14 for compressing an intake fluid, a guide casing 16 for housing the impeller wheel 14 and guiding intake fluid, and a scroll-chamber frame 20 forming a scroll chamber 18 for guiding the intake fluid having passed through the guide casing 16 to outside.

The impeller wheel 14 includes a hub 15 mounted to an end of a rotation shaft 19, and a plurality of blades 17 extending outward in the radial direction from the surface of the hub 15 and disposed along the circumferential direction.

The scroll chamber 18 is disposed radially outside (i.e., on an outer side in the radial direction) of the guide casing 16, with respect to a rotational axis S of the impeller wheel 14. As illustrated in FIG. 2, an inner peripheral wall surface of the scroll chamber 18 may be formed by a scroll-chamber inner forming part 22 and a scroll-chamber outer forming part 24 described below.

The scroll-chamber frame 20 includes the scroll-chamber inner forming part 22 forming the inner peripheral wall surface of the scroll chamber 18 and a scroll-chamber outer forming part 24 forming an outer wall surface of the scroll chamber 18. As illustrated in FIG. 2, the scroll-chamber inner forming part 22 and the scroll-chamber outer forming part 24 may be fastened to each other by a bolt 64 at a flange portion 68.

A cylindrical support part 32 of a cylindrical shape having the same central axis as the rotational axis S is disposed radially outside the guide casing 16 and radially inside the scroll-chamber inner forming part 22. The scroll-chamber inner forming part 22 and the guide casing 16 are connected to each other via the cylindrical support part 32.

A diffuser 26 may be formed on an outlet of the impeller wheel 14.

If the impeller wheel 14 breaks apart while rotating in the compressor 10 of centrifugal-compression type, fragments of the impeller wheel 14 receive a force in a circumferential direction (the radial direction) due to a centrifugal force and a force in the axial direction due to a pressure difference in the axial direction, for instance, and thus the fragments may scatter in a region between the radial direction and the axial direction and hit the guide casing 16.

Accordingly, if the impeller wheel 14 breaks apart and fragments of the impeller wheel 14 scatter to hit the guide casing 16, the cylindrical support part 32 of a cylindrical shape, which is disposed radially inside the scroll-chamber inner forming part 22 and which has the same central axis as the rotational axis S of the impeller wheel 14, collides with the fragments of the impeller wheel 14 to be broken apart before the scroll-chamber inner forming part 22 does, and thereby energy is absorbed. Thus, kinetic energy of the fragments of the impeller wheel 14 reaching the scroll-chamber inner forming part 22 is reduced, which improves a containment property.

Further, the cylindrical support part 32 has a cylindrical shape and thus has a simple structure.

Thus, with the above compressor, it is possible to improve a containment property of the compressor 10 with a simple structure in which the scroll-chamber inner forming part 22 and the guide casing 16 are connected to each other via the cylindrical support part 32 of a cylindrical shape.

In an embodiment illustrated in FIGs. 2 and 3, the cylindrical support part 32 is formed integrally with the scroll-chamber inner forming part 22 of the scroll-chamber frame 20. In this case, it is possible to improve a strength of the cylindrical support part 32 and the scroll-chamber inner forming part 22 formed as a single piece.

In another embodiment, the cylindrical support part 32 may be formed as a separate member from the scroll-chamber inner forming part 22 of the scroll-chamber frame 20. In this case, the cylindrical support part 32 and the scroll-chamber inner forming part 22 have a simpler and more easily obtainable shape than an integrated structure, which makes it possible to reduce production cost.

In an embodiment illustrated in FIGs. 2 and 3, the compressor 10 further includes a first rib 34 which extends on an outer side with respect to the radial direction of the cylindrical support part 32 and which is connected to the scroll-chamber inner forming part 22.

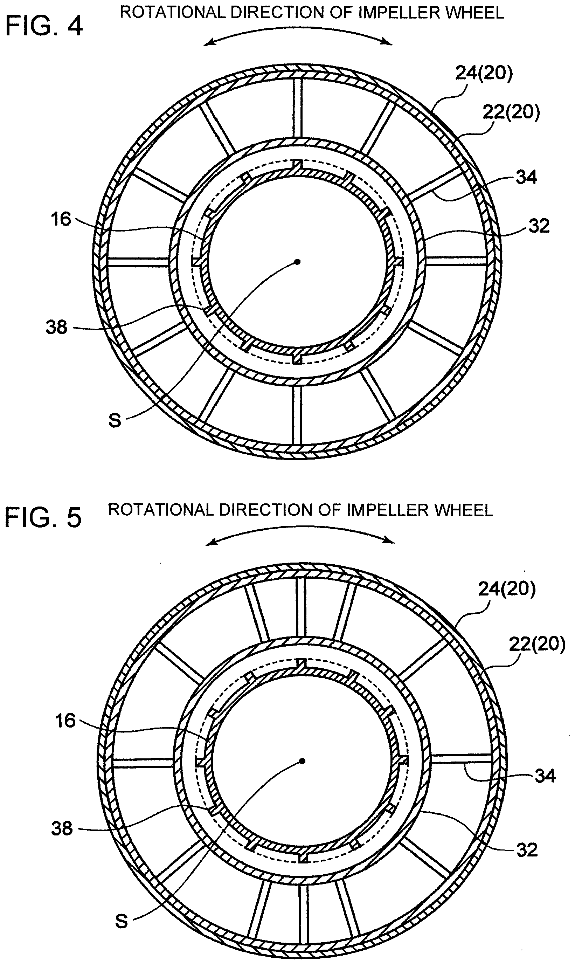

FIGs. 4 and 5 are each a schematic cross-sectional view taken along line B-B in FIG. 3.

The shape and arrangement of the first rib 34 are not particularly limited, and may be selected optionally.

A plurality of the first ribs 34 may be disposed at regular intervals so as to extend radially (in radial directions) from the rotational axis S in center, as illustrated in FIG. 4, for instance. Alternatively, the ribs may be arranged at irregular intervals, as illustrated in FIG. 5.

In an embodiment illustrated in FIGs. 2 and 3, the compressor 10 includes the silencer 13 for reducing noise that is generated during rotation of an impeller wheel of the compressor 10.

The silencer 13 includes a silencer body part 42 having a function to reduce noise and a bell-mouth part 44 for guiding intake fluid having passed through the silencer body part 42 to the impeller wheel 14. The bell-mouth part 44 and the guide casing 16 normally form a smooth flow-path shape.

The silencer 13 includes a third rib 36 extending on an outer side of the bell-mouth part 44 with respect to the radial direction. The third rib 36 is disposed so as to connect an outer peripheral surface of the bell-mouth part 44 and at least a part of the silencer body part 42.

If the impeller wheel 14 of the compressor 10 breaks apart, fragments of the impeller wheel 14 scatter also toward the silencer 13 from the compressor 10. Further, fragments having a large kinetic energy hit the guide casing 16.

Accordingly, with the guide casing 16 fastened to the scroll-chamber frame 20 (formed integrally with the cylindrical support part 32 in FIGs. 2 and 3) by a bolt 62 as illustrated in FIGs. 2 and 3, the bolt 62 may receive a great force and break apart. In this case, the guide casing 16 may try to fall out in the axial direction. This falling-out movement of the guide casing 16 pushes the silencer 13 in the axial direction.

Further, with the silencer 13 and the scroll-chamber frame 20 fastened to each other at a flange portion 66 of the silencer 13 and the flange portion 68 of the scroll-chamber frame by the bolt 64 as illustrated in FIGs. 2 and 3, the bolt 64 also may receive a great force and break apart.

Thus, the silencer 3 may fall off the compressor 10 unless there is something that absorbs a force in the axial direction applied to the silencer 13 before breakage of a connecting portion such as the bolt 62 and the bolt 64 as describe above.

The turbocharger 4 illustrated in FIGs. 2 and 3 includes the third rib 36 extending on an outer side of the bell-mouth part 44 with respect to the radial direction. Thus, in response to breakage of the impeller wheel 14, kinetic energy of scattering fragments having an axial component is absorbed by breakage of the third rib 36, before the kinetic energy breaks a connecting portion between the silencer 13 and the guide casing 16 breaks.

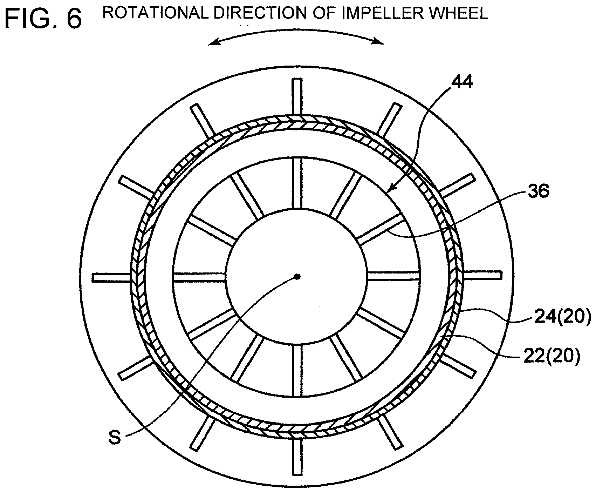

FIG. 6 is an example of a schematic cross-sectional view taken along line A-A in FIG. 3.

The shape and arrangement of the third rib 36 are not particularly limited, and may be selected optionally.

A plurality of the third ribs 36 may be disposed at regular intervals so as to extend radially (in radial directions) from the rotational axis S in center, as illustrated in FIG. 6, for instance. Further, though not illustrated, the ribs may be arranged at irregular intervals.

The shape of the bell-mouth part 44 is not particularly limited.

In some embodiments, as illustrated in FIG. 3, an inner peripheral surface of the bell-mouth part 44 may have a shape including a streamline-shaped curved surface in cross section taken in the axial direction of the compressor 10. In this case, as compared to a case in which the inner peripheral surface has a linear cross section, intake fluid flows smoothly from the bell-mouth part 44 toward the impeller wheel 14.

The shape of the guide casing 16 is not particularly limited , and it is sufficient if intake fluid sucked in from a fluid inlet 52 of the compressor can be guided through the blades 17 of the impeller wheel 14 to the scroll chamber 18.

As illustrated in FIGs. 2 and 3, the guide casing 16 may include a recirculation channel 54 formed to expand an operational range (a flow-rate range of intake fluid) of the impeller wheel 14.

In some embodiments, as illustrated in FIG. 3, the recirculation channel 54 of the guide casing 16 includes an inlet slit 56 and an outlet slit 58. This guide casing 16 can be obtained by forming a slit-shape hole after making a slit-free guide casing. Thus, formation is facilitated and production cost can be reduced.

In some embodiments, as illustrated in FIG. 3, the guide casing 16 may include a second rib 38 extending on an outer side of the guide casing 16 with respect to the radial direction, the second rib 38 being disposed in a region surrounded by the guide casing 16 and the cylindrical support part 32.

As described above, rigidity of the guide casing 16 is improved by the second rib 38 disposed in a region surrounded by the cylindrical support part 32 and the guide casing 16 positioned in the vicinity of the impeller wheel 14, which makes it possible to reduce kinetic energy of fragments of the impeller wheel reaching the cylindrical support part 32 connecting the scroll-chamber frame 20 and the guide casing 16 if the impeller wheel 14 breaks, and thus to further improve a containment property of the compressor 10 in response to breakage of the impeller wheel 14.

Further, if the third rib 36 is disposed radially outside the bell-mouth part 44 and the first rib 34 is connected to the scroll-chamber inner forming part 22 as in the embodiment illustrated in FIG. 3, the guide casing 16 having the second rib 38 breaks before the cylindrical support part 32 having the first rib 34 and the bell-mouth part 44 having the third rib 36 do, thereby absorbing kinetic energy of fragments. Thus, providing the second rib 38 further improves a containment property of the compressor 10 in response to breakage of the impeller wheel 14.

The shape and arrangement of the second rib 38 are not particularly limited, and may be selected optionally.

A plurality of the second ribs 38 may be disposed at regular intervals so as to extend radially (in radial directions) from the rotational axis S in center, as illustrated in FIGs. 4 and 5, for instance. Further, the ribs may be arranged at irregular intervals.

The compressor and the turbocharger of the present invention can be applied to a variety of internal combustion engines including a ship engine, a power-generation engine, and the like.

### Description of Reference Numerals

- 4: Turbocharger
- 10: Compressor
- 13: Silencer
- 14: Impeller wheel
- 15: Hub
- 16: Guide casing
- 17: Blade
- 18: Scroll chamber
- 20: Scroll-chamber frame
- 22: Scroll-chamber inner forming part
- 24: Scroll-chamber outer forming part
- 32: Cylindrical support part
- 34: First rib
- 36: Third rib
- 38: Second rib
- 42: Silencer body part
- 44: Bell-mouth part
- 52: Fluid inlet
- 54: Recirculation channel
- 56: Inlet slit
- 58: Outlet slit
- 62: Bolt
- 64: Bolt
- 66: Flange portion
- 68: Flange portion

## Claims

1. A compressor, comprising:
a guide casing (16) housing an impeller wheel (14) for compressing an intake fluid, and being configured to guide the intake fluid;
a scroll-chamber frame (20) forming a scroll-chamber (18) for guiding the intake fluid having passed through the guide casing (16) to the outside,
the scroll-chamber frame (20) further comprising:
a scroll-chamber inner forming part (22) disposed outside the guide casing (16) in a radial direction of a rotational axis of the impeller wheel (14), and forming an inner peripheral wall surface of the scroll chamber (18); a scroll-chamber outer forming part (24) forming an outer peripheral wall surface of the scroll chamber (18); and
a cylindrical support part (32) disposed outside the guide casing (16) in the radial direction and inside the scroll-chamber inner forming part (22) in the radial direction, the cylindrical support part (32) of a cylindrical shape having the same central axis as the rotational axis of the impeller wheel (14);
wherein the scroll-chamber inner forming part (22) and the guide casing (16) are connected to each other via the cylindrical support part (32), and
wherein the scroll-chamber inner forming part (22) and the scroll-chamber outer forming part (24) are fastened to each other by a bolt (64) at a flange portion (68), and a silencer (13) configured to reduce noise, wherein the silencer (13) and the scroll-chamber frame (20) are fastened to each other at a flange portion (66) of the silencer (13) and the flange portion (68) of the scroll-chamber frame (20) by the bolt (64), and
**characterized in that** the compressor further comprises:
a plurality of first ribs (34) extending on an outer side with respect to the radial direction of the cylindrical support (32) from the rotational axis S, and connected to the scroll-chamber inner forming part (22), and
a second rib (38) extending on an outer side with respect to the radial direction of the guide casing (16), and being disposed in a region surrounded by the cylindrical support part (32) and the guide casing (16).

2. The compressor according to claim 1, wherein the silencer (13) comprises:
a silencer body part (42) configured to reduce noise;
a bell-mouth part (44) connected to the guide casing (16) and configured to guide the intake fluid having passed through the silencer body part (42) to the impeller wheel (14); and
a third rib (36) extending on an outer side with respect to the radial direction of the bell-mouth part (44).

## Patentansprüche

1. Verdichter, umfassend:
ein Führungsgehäuse (16), das ein Laufrad (14) zum Verdichten eines Ansaugfluids aufnimmt und zum Führen des Ansaugfluids konfiguriert ist;
einen Schneckenkammerrahmen (20), der eine Schneckenkammer (18) zum Führen des durch das Führungsgehäuse (16) nach außen geförderten Ansaugfluids bildet,
wobei der Schneckenkammerrahmen (20) weiter umfasst:
ein inneres Schneckenkammerbildungsteil (22), das außerhalb des Führungsgehäuses (16) in radialer Richtung einer Drehachse des Laufrades (14) angeordnet ist und eine innere Umfangswandfläche der Schneckenkammer (18) bildet; ein äußeres Schneckenkammerbildungsteil (24), das eine äußere Umfangswandfläche der Schneckenkammer (18) bildet; und
ein zylindrisches Stützteil (32), das außerhalb des Führungsgehäuses (16) in radialer Richtung und innerhalb des inneren Schneckenkammerbildungsteils (22) in radialer Richtung angeordnet ist, wobei das zylindrische Stützteil (32) mit einer zylindrischen Form die gleiche Mittelachse wie die Drehachse des Laufrades (14) aufweist;
wobei das innere Schneckenkammerbildungsteil (22) und das Führungsgehäuse (16) über das zylindrische Stützteil (32) miteinander verbunden sind, und
wobei das innere Schneckenkammerbildungsteil (22) und das äußere Schneckenkammerbildungsteil (24) durch eine Schraube (64) an einem Flanschabschnitt (68) aneinander befestigt sind, und wobei ein Schalldämpfer (13) zur Geräuschminderung konfiguriert ist, wobei der Schalldämpfer (13) und der Schneckenkammerrahmen (20) an einem Flanschabschnitt (66) des Schalldämpfers (13) und dem Flanschabschnitt (68) des Schneckenkammerrahmens (20) durch die Schraube (64) aneinander befestigt sind, und
**dadurch gekennzeichnet, dass** das Verdichter weiter umfasst:
eine Vielzahl von ersten Rippen (34), die sich auf einer Außenseite in Bezug auf die radiale Richtung des zylindrischen Stützteils (32) von der Drehachse S aus erstrecken und mit dem inneren Schneckenkammerbildungsteil (22) verbunden sind, und
eine zweite Rippe (38), die sich auf einer Außenseite in Bezug auf die radiale Richtung des Führungsgehäuses (16) erstreckt und in einem Bereich angeordnet ist, der von dem zylindrischen Stützteil (32) und dem Führungsgehäuse (16) umgeben ist.

2. Verdichter nach Anspruch 1, wobei der Schalldämpfer (13) umfasst:
ein Schalldämpferkörperteil (42), das konfiguriert ist, um Geräusche zu mindern;
ein Trichterteil (44), das mit dem Führungsgehäuse (16) verbunden und konfiguriert ist, um das durch das Schalldämpferkörperteil (42) hindurchgegangene Ansaugfluid zum Laufrad (14) zu führen; und
eine dritte Rippe (36), die sich auf einer Außenseite in Bezug auf die radiale Richtung des Trichterteils (44) erstreckt.

## Revendications

1. Compresseur comprenant :
un boîtier de guidage (16) logeant une roue à aubes (14) pour la compression d'un fluide d'admission, et étant configuré pour guider le fluide d'admission ;
un cadre de chambre en spirale (20) formant une chambre en spirale (18) pour le guidage du fluide d'admission qui est passé au travers du boîtier de guidage (16) vers l'extérieur,
le cadre de chambre en spirale (20) comprenant en outre :
une partie de formation intérieure de chambre en spirale (22) disposée en dehors du boîtier de guidage (16) dans une direction radiale d'un axe de rotation de la roue à aubes (14), et formant une surface de paroi périphérique intérieure de la chambre en spirale (18) ; une partie de formation extérieure de chambre en spirale (24) formant une surface de paroi périphérique extérieure de la chambre en spirale (18) ; et
une partie de support cylindrique (32) disposée en dehors du boîtier de guidage (16) dans la direction radiale et à l'intérieur de la partie de formation inférieure de chambre en spirale (22) dans la direction radiale, la partie de support cylindrique (32) d'une forme cylindrique présentant le même axe central que l'axe de rotation de la roue à aubes (14) ;
dans lequel la partie de formation intérieure de chambre en spirale (22) et le boîtier de guidage (16) sont raccordés l'un à l'autre via la partie de support cylindrique (32), et
dans lequel la partie de formation intérieure de chambre en spirale (22) et la partie de formation extérieure de chambre en spirale (24) sont fixées l'une à l'autre par un boulon (64) sur une portion de bride (68), et un silencieux (13) configuré pour réduire le bruit, dans lequel le silencieux (13) et le cadre de chambre en spirale (20) sont fixés l'un à l'autre sur une portion de bride (66) du silencieux (13) et la portion de bride (68) du cadre de chambre en spirale (20) par le boulon (64), et
**caractérisé en ce que** le compresseur comprend en outre :
une pluralité de premières nervures (34) s'étendant sur un côté extérieur par rapport à la direction radiale du support cylindrique (32) depuis l'axe de rotation S, et raccordées à la partie de formation intérieure de chambre en spirale (22), et
une seconde nervure (38) s'étendant sur un côté extérieur par rapport à la direction radiale du boîtier de guidage (16), et étant disposée dans une région entourée par la partie de support cylindrique (32) et le boîtier de guidage (16).

2. Compresseur selon la revendication 1, dans lequel le silencieux (13) comprend :
une partie de corps de silencieux (42) configurée pour réduire le bruit ;
une partie en évasement (44) raccordée au boîtier de guidage (16) et configurée pour guider le fluide d'admission qui est passé au travers de la partie de corps de silencieux (42) à la roue à aubes (14) ; et
une troisième nervure (36) s'étendant sur un côté extérieur par rapport à la dilection radiale de la partie en évasement (44).
